# EUROPÄISCHE PATENTSCHRIFT

(11) **EP 0 638 407 B1**
(45) Veröffentlichungstag und Bekanntmachung des Hinweises auf die Patenterteilung: **01.10.1997**
(21) Anmeldenummer: 94810461.7
(22) Anmeldetag: 08.08.1994
(51) Int. Cl.: B29C 45/28

(54) **Spritzdüse**
Injection nozzle
Buse d'injection

(30) Priorität: 13.08.1993 CH 2406/93
(43) Veröffentlichungstag der Anmeldung: 15.02.1995
(73) Patentinhaber: AWM Werkzeugbau AG, 5630 Muri AG (CH)
(72) Erfinder: Krummenacher, Josef, CH-5630 Muri (CH)
(74) Vertreter: AMMANN PATENTANWAELTE AG BERN

(56) Entgegenhaltungen:
- EP-A- 0 583 601
- DE-A- 3 833 220
- DE-B- 1 124 234
- US-A- 2 865 050
- US-A- 4 312 630
- US-A- 4 652 230
- US-A- 5 098 280

## Beschreibung

Die vorliegende Erfindung betrifft eine Spritzdüse für eine Spritzgussform gemäss dem Oberbegriff des Anspruchs 1.

Aus der Schrift FR-A-2 537 497 ist eine Spritzgussdüse bekannt, bei der ein konischer Düsenspitz freitragend in den Formeinsatz der Düse greift, ohne denselben zu berühren. Diese Lösung wird getroffen, um an der Austrittstelle den Wärmeübergang zwischen den beiden erwähnten Teilen möglichst gering zu halten. Damit ist jedoch der Nachteil verbunden, dass zwischen dem Düsenspitz und dem Formeinsatz seitlich des Austrittskanals ein Hohlraum verbleibt, in welchen das Material beim Giessen eintreten und verbleiben kann. Hierdurch wird ein schneller Farbwechsel erheblich beeinträchtigt. Weiter ergibt sich auch ein verhältnismässig intensiver, störender Wärmeübergang zwischen dem Düsenspitz und dem Formeinsatz. Sodann ist die Zentrierung der Düsennadel bezüglich der Angussöffnung im Formeinsatz ungenügend, da die zylindrische Nadelspitze bezüglich des zylindrischen Endteils der Angussöffnung nicht so genau geführt ist, dass ein Anfressen verhindert wird.

Aus der Schrift US-A-4 652 230 ist eine Spritzdüse mit konisch angespitzter Nadel bekannt. Diese Nadel wirkt mit einer napfartigen Angussöffnung zusammen. Geführt wird die Nadel durch ein spezielles Führungsteil, das beabstandet zur Angussöffnung angeordnet ist. Dieses Führungsteil weist mehrere konzentrisch um die Führungsöffnung angeordnete Kanalbohrungen für den Durchfluss des Spritzgussmaterials auf. Bei dieser Konstruktion ist wie bei der erstgenannten Schrift das sichere, verschleissfreie Zusammenwirken der Nadel mit der Angussöffnung kritisch zu beurteilen. Weiter steht der beheizte Düsenspitz mit dem Bereich der Angussöffnung in unmittelbarem Wärmekontakt, was zu spritzgusstechnisch ungünstigen Temperaturverteilungen führt. Schliesslich ist auch wieder ein relativ grosser Hohlraum vorhanden, der wie bei der erstgenannten Schrift einen jeweiligen Farbwechsel erheblich beeinträchtigt.

Aus einer weiteren Schrift DE-B-1 124 234 ist eine ältere Spritzdüsenkonstruktion bekannt, bei der eine zylindrische Nadel mit einer zylindrischen Angussöffnung zusammenwirkt. Die Nadel wird dabei im Bereich der Angussöffnung geführt, wobei das Führungsteil konzentrisch angeordnete Durchbrüche aufweist, die den Materialfluss ermöglichen. Die Konstruktion ist insgesamt so geartet, dass sie heutigen thermischen Forderungen in keiner Weise entspricht und damit spritzgusstechnisch veraltet ist.

Die Aufgabe der vorliegenden Erfindung ist es, die den Konstruktionen der genannten Schriften anhaftenden Nachteile zu vermeiden. Dies bedeutet, dass - insbesondere ausgehend von der Schrift US-A-4 652 230 - eine Spritzdüse angegeben werden soll, bei der durch eine möglichst einfache und wirksame Massnahme gleichzeitig den Problemen verschleissfreies, sicheres Schliessen und Öffnen der Ausgangsöffnung durch eine Nadel, Abdichten des Bereiches der Angussöffnung möglichst nahe bei dieser und Vermeidung bzw. starke Verminderung des Wärmeübergangs zwischen dem geheizten Düsenspitz und dem Bereich der Angussöffnung Rechnung getragen wird.

Diese Aufgabe wird gemäss dem Kennzeichen des Anspruchs 1 gelöst. Die abhängigen Ansprüche geben Ausgestaltungen der Erfindung an.

Die durch die Vermeidung der aufgezählten Nachteile der bisherigen Konstruktion gewonnenen Vorteile basieren zu wesentlichem Teil auf der Einführung einer zusätzlichen, eigenständigen Zentrierbuchse. Diese Zentrierbuchse bewirkt einerseits eine Abdichtung zwischen dem Düsenspitz und dem Formeinsatz, derart dass kein Material in den Hohlraum zwischen diesen beiden Teilen gelangen kann. Damit wird ein wesentlich rascherer problemloserer Farbwechsel möglich. Der Wärmeübergang zwischen dem Düsenspitz und dem Formeinsatz kann trotzdem gering gehalten werden, indem die erwähnte Zentrierbuchse dünnwandig ausgeführt wird und nur auf eine geringe Länge in den Formeinsatz greift, die aber genügt um die gegenseitige Zentrierung und Abdichtung dieser Teile zu gewährleisten. Dank dieser gegenseitigen Zentrierung unmittelbar vor der Angussöffnung können dafür die übrigen gegenseitigen Berührungsflächen zwischen dem Formeinsatz und den geheizten Teilen der Spritzdüse besonders gering gehalten werden, wobei zudem eine sehr genaue Zentrierung der Düsennadel bezüglich der Angussöffnung gegeben ist.

Weitere Besonderheiten und Vorteile der erfindungsgemässen Düse ergeben sich aus der folgenden Beschreibung eines Ausführungsbeispiels und zweier Ausführungsvarianten, die in der Zeichnung dargestellt sind.
- Fig. 1: zeigt einen Axialschnitt des Ausführungsbeispiels,
- Fig. 2: zeigt einen Ausschnitt aus Fig. 1 in grösserem Masstab, und die
- Fig. 3 u. 4: zeigen je einen Axialschnitt durch eine Ausführungsvariante.

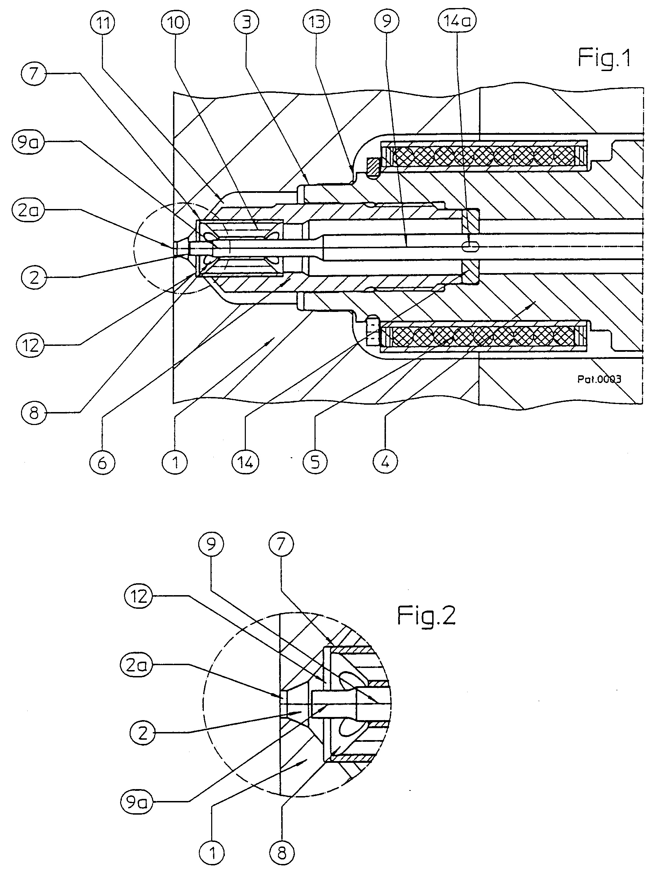

Die Form gemäss den Figuren 1 und 2 weist einen Formeinsatz 1 aus gehärtetem Stahl mit der Angussöffnung 2 auf. Dieser Formeinsatz 1 sitzt mit einer schmalen Zentrierfläche 3 auf dem Düsenkörper 4, welcher mittels einer Wendelpatrone 5 geheizt werden kann. In das vordere Ende des Düsenkörpers 4 ist der Düsenspitz 6 eingeschraubt. Zwischen den Düsenspitz 6 und eine Schulter 7 des Formeinsatzes ist eine dünnwandige Zentrierbuchse 8 aus gehärtetem Stahl eingesetzt. Eine zentrale Bohrung dieser Zentrierbuchse 8 dient der Führung des vorderen Endes der Düsennadel 9, und ein Kranz von Bohrungen 10 der Zentrierbuchse 8 dient dem Materialdurchfluss zur Oeffnung 2. Die Zentrierbuchse 8 berührt den Formeinsatz nur auf eine minimale Tiefe, welche gerade genügt, um eine gegenseitige Zentrierung der Zentrierbuchse 8 bzw. des Düsenspitzes 6 und dem Formeinsatz sowie die gegenseitige Abdichtung der zwischen diesen beiden Teilen liegenden Kammer 11 sicherzustellen. Dank dieser zusätzlichen Zentrierung unmittelbar bei der Austrittsöffnung kann auch die Zentrierfläche 3 verhältnismässig schmal bzw. klein gehalten werden, und es erfolgt somit nur ein minimaler Wärmeübergang zwischen dem Formeinsatz und den ihn berührenden beheizten Teilen. Neben der Zentrierfläche 3 liegt der Formeinsatz immer im Abstand von den beheizten Teilen, so dass dort der Wärmeübergang gering ist. Zwischen der Zentrierbuchse 8 und der Schulter 7 verbleibt eine Dilatationsfuge 12, welche eine gewisse gegenseitige axiale Verschiebung zwischen den Teilen 1 und 8 infolge der unterschiedlichen Erwärmung und des unterschiedlichen Materials erlaubt. Eine entsprechende Dilatationsfuge 13 besteht auch zwischen dem Düsenkörper 4 und dem Formeinsatz 1. Die Düsennadel 9 ist zwischen radialen Rippen 14a eines Führungsrings 14 geführt, welcher zwischen den Rippen Durchbrüche aufweist, durch welche das Material durchfliessen kann. Die Führung und Zentrierung der Düsennadel 9 unmittelbar vor der Angussöffnung 2 gestattet ein präzises, spielarmes Eingreifen einer zylindrischen Spitze 9a der Düsennadel 9 in den zylindrischen Teil 2a der Angussöffnung 2 und damit eine sehr saubere Verschliessung bzw. Angussstelle am Spritzteil. Dank der gegenseitigen Zentrierung der Düsennadel 9 und des Formeinsatzes 1 unmittelbar vor der Angussöffnung 2, 2a kann der zylindrische Teil 2a der Angussöffnung sehr kurz, z. B. nur 0,2 mm lang ausgeführt werden, so dass beim Schliessen durch die Nadel nur sehr wenig Material nachgepresst werden muss.

Die Zentrierbuchse 8 mit den ringartig angeordneten Durchgangsbohrungen 10 wirkt zusätzlich als Filter, welches eventuelle Fremdkörper auffängt und damit die Angussöffnung und die Düsennadel vor Beschädigung schützt.

Beim dargestellten Ausführungsbeispiel ist die Buchse 8 als besonderer Teil aus gehärtetem Stahl in den Düsenspitz eingesetzt, welcher in diesem Falle aus Berilliumkupfer besteht. Es wäre aber auch denkbar, den Düsenspitz 6 und die Zentrierbuchse 8 einteilig aus dem selben Material herzustellen.

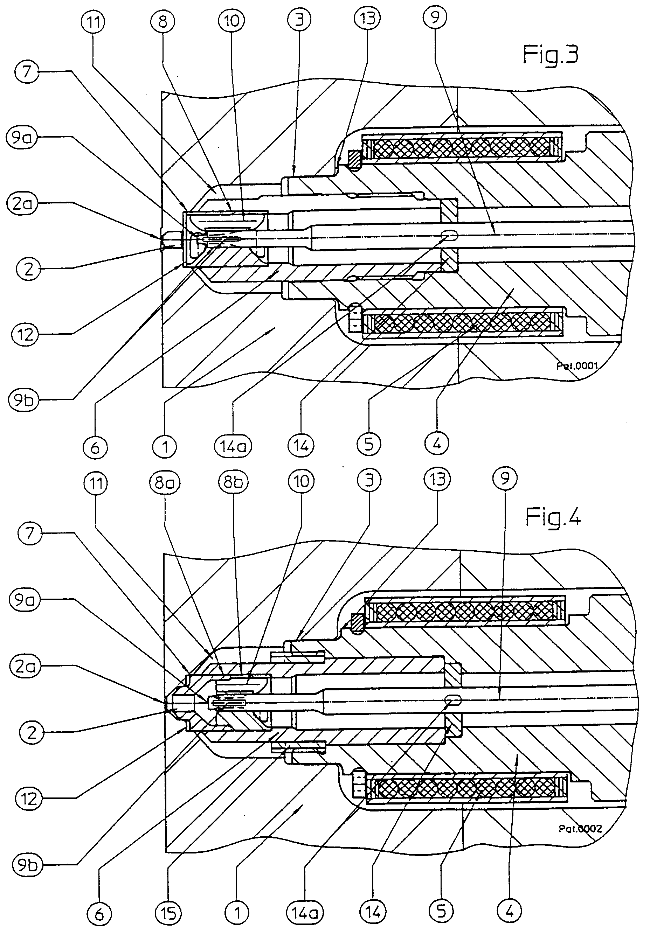

In den Figuren 3 und 4 sind entsprechende Teile gleich bezeichnet wie in den Figuren 1 und 2, auch wenn sie in Einzelheiten etwas abweichen. Gemäss Fig. 3 weist die Angussöffnung im Formeinsatz 1 hinter dem axial sehr kurzen Teil 2a einen weiteren zylindrischen, mit 2 bezeichneten Teil auf, welcher der zusätzlichen Führung des hinter der Spitze 9a anschliessenden zylindrischen Teils der Düsennadel 9 dient. Es wird damit eine noch wirksamere Führung und Zentrierung der Düsennadel erreicht. In dem beim Schliessen in den weiteren Führungsteil der Angussöffnung 2 eindringenden Abschnitt der Düsennadel 9 sind Nuten 9b gefräst, durch welche das Material aus dem weiteren Raum der Angussöffnung zurückfliessen kann, wenn die Düsennadel in diesen Raum eindringt.

Auch bei der Ausführung nach Fig. 4 ist die Düsennadel unmittelbar hinter dem kurzen, zylindrischen Teil 2a der Angussöffnung in einem erweiterten, zylindrischen Teil 2 zusätzlich geführt, nur dass in diesem Falle der Führungsteil 2 nicht im Formeinsatz 1, sondern in einem vorderen Teil 8a einer zweiteiligen Zentrierbuchse 8, 8a liegt. Dieser Vorderteil 8a der Zentrierbuchse ist zusätzlich an einer weiteren Schulter 7a des Formeinsatzes 1 zentriert. Ein weiterer Unterschied gegenüber den übrigen Ausführungen besteht darin, dass der Düsenspitz 6 nicht mit dem Düsenkörper verschraubt ist, sondern eingepasst und mittels eines Gewinderings 15 gesichert ist. Die Passung des Düsenspitzes 6 in der Bohrung des Düsenkörpers ist so gewählt, dass sich nach der Erwärmung im Betrieb ein satter Sitz ergibt, wobei der Düsenkörper 4 aus Stahl und der Düsenspitz aus Berilliumkupfer besteht. Es wird damit eine noch genauere gegenseitige Positionierung der Teile erreicht, indem Ungenauigkeiten infolge der direkten Verschraubung des Düsenspitz mit dem Düsenkörper vermieden werden.

## Patentansprüche

1. Spritzdüse für eine Spritzgussform, umfassend einen Formeinsatz (1) mit Angussöffnung (2),
einen Düsenspitz (6),
einen heizbaren Düsenkörper (4), in dem der Düsenspitz (6) unter gutem Wärmekontakt gehaltert ist,
eine axial verschiebbare Düsennadel (9) zum Verschliessen und Oeffnen der Angussöffnung (2), die durch einen Führungsring (14) mit Durchbrüchen geführt ist,
dadurch gekennzeichnet,
dass die Spitze (9a) der Düsennadel (9) und die Angussöffnung (2) zumindest einen zylindrischen Bereich aufweisen, die so aufeinander abgestimmt sind, dass bei ihrem Ineinandergreifen ein vollständiges Verschliessen der Oeffnung (2) erfolgt, und
dass zusätzlich zum Führungsring (14) eine den Fluss von Spritzgussmaterial nicht behindernde Zentrierbuchse (8) vorgesehen ist, die in unmittelbarer Nachbarschaft zur Angussöffnung den Düsenspitz (6) mit dem Formeinsatz (1) axial zentriert, die die Spitze (9a) der Düsennadel (9) so führt und die einen Leerraum (11) zwischen Düsenspitz (6) und Formeinsatz (1) gegen das Eindringen von Spritzgussmaterial so abdichtet, dass ein unmittelbarer Wärmefluss vom beheizten Düsenspitz (6) zum Formeinsatz (1) nicht gegeben und ein mittelbarer Wärmefluss über die Zentrierbuchse (8), die Düsennadel (9) und das Spritzgussmaterial minimal klein ist.

2. Spritzgussdüse nach Anspruch 1,
dadurch gekennzeichnet,
dass die Angussöffnung (2) einen einzigen zylindrischen Bereich (2a) aufweist, und
dass die Länge diees zylindrischen Bereichs (2a) etwa 0,2 mm beträgt.

3. Spritzgussdüse nach Anspruch 1,
dadurch gekennzeichnet,
dass die Angussöffnung (2) und die Düsennadel (9) je zwei benachbarte zylindrische Bereiche unterschiedlichen Durchmessers aufweisen,
wobei der zylindrische Bereich der Düsennadel (9) mit grösserem Durchmesser zusätzlich Nuten (9b) in Längsrichtung der Nadel (9) aufweist.

4. Spritzdüse nach Anspruch 1,
dadurch gekennzeichnet,
dass die Zentrierbuchse (8) dünnwandig und aus Stahl gefertigt ist.

5. Spritzdüse nach Anspruch 1,
dadurch gekennzeichnet,
dass die Zentrierbuchse (8) eine zentrale Bohrung und einen Kranz periphärer Bohrungen (10) aufweist.

6. Spritzdüse nach Anspruch 1,
dadurch gekennzeichnet,
dass die Zentrierbuchse (8, 8a) zweigeteilt ist.

## Claims

1. Injection moulding nozzle for an injection mould, comprising a mould plate (1) having a gate opening (2), a nozzle tip (6),
a heatable nozzle body (4) in which the nozzle tip (6) is maintained with a good thermal contact,
an axially displaceable nozzle needle (9) for the purpose of closing and opening the gate opening (2), which is guided by a guiding ring (14) having passages,
characterised in that
the point (9a) of the nozzle needle (9) and the gate opening (2) comprise at least one cylindrical area, said areas being adjusted to each other in such a manner that a complete closure results when they engage in one another, and in that
in addition to the guiding ring (14), a centering bushing (8) is provided which does not obstruct the flow of the injected material and which axially centers the nozzle tip (6) with respect to the mould plate (1) immediately next to the gate opening, which guides the point (9a) of the nozzle needle (9) in such a manner and seals a cavity (11) between the nozzle tip (6) and the mould plate (1) in such a manner as to prevent the entrance of injection moulding material in such a manner that a direct heat transfer from the heated nozzle tip (6) to the mould plate (1) does not occur and an indirect heat transfer over the centering bushing (8), the nozzle needle (9), and the injection moulding material is minimal.

2. Injection moulding nozzle according to claim 1,
characterised in that the gate opening (2) comprises a single cylindrical area (2a),
and in that the length of this cylindrical area (2a) is about 0.2 mm.

3. Injection moulding nozzle according to claim 1,
characterised in that the gate opening (2) and the nozzle needle (9) each comprise two adjoining cylindrical areas of different diameters,
the cylindrical area of the nozzle needle (9) whose diameter is greater further comprising grooves in the longitudinal direction of the needle (9).

4. Injection nozzle according to claim 1,
characterised in that the centering bushing (8) is thin-walled and made of steel.

5. Injection nozzle according to claim 1,
characterised in that the centering bushing (8) comprises a central bore and a crown of peripheral bores (10).

6. Injection nozzle according to claim 1,
characterised in that the centering bushing (8, 8a) is bipartite.

## Revendications

1. Buse à injection pour un moule de coulage par injection, comprenant une paroi de moule (1) avec ouverture d'entrée (2),
une extrémité (6) de la buse,
un corps (4) de buse chauffable, dans lequel l'extrémité (6) de la buse est retenue en bon contact thermique,
une aiguille de buse (9) axialement déplaçable pour la fermeture et l'ouverture de l'ouverture d'entrée (2), guidée par l'intermédiaire d'une bague de guidage (14) présentant des passages,
caractérisée en ce que
la pointe (9a) de l'aiguille de buse (9) et l'ouverture d'entrée (2) présentent chaque fois au moins une zone cylindrique, lesdites zones étant ajustées l'une à l'autre de telle manière que leur emboîtement entraîne une fermeture complète de l'ouverture (2), et
qu'en plus de la bague de guidage (14), une douille de centrage est prévue qui ne gêne pas l'écoulement de la matière injectée, qui centre axialement l'extrémité (6) de la buse par rapport à la paroi de moule (1) à proximité immédiate de l'ouverture d'entrée et qui guide la pointe (9a) de l'aiguille de buse (9) de telle manière et étanche une cavité (11) entre l'extrémité (6) de la buse et la paroi de moule (1) contre la pénétration de matière injectée de telle manière qu'un transfert de chaleur direct de l'extrémité (6) chauffée de la buse à la paroi de moule (1) n'a pas lieu et qu'un transfert de chaleur indirect par l'intermédiaire de la douille de centrage (8), de l'aiguille de buse (9) et de la matière injectée est minimal.

2. Buse de coulage par injection selon la revendication 1,
caractérisée en ce que l'ouverture d'entrée (2) présente une seule zone cylindrique (2a), et que la longueur de cette zone cylindrique (2a) est environ 0,2 mm.

3. Buse de coulage par injection selon la revendication 1,
caractérisée en ce que l'ouverture d'entrée (2) et l'aiguille de buse (9) comportent chaque fois deux zones cylindriques voisines de diamètres différents,
la zone cylindrique de l'aiguille de buse (9) dont le diamètre est plus grand comportant en plus des rainures (9b) en direction longitudinale de l'aiguille (9).

4. Buse à injection selon la revendication 1, caractérisée en ce que la douille de centrage (8) est à parois minces et en acier.

5. Buse à injection selon la revendication 1, caractérisée en ce que la douille de centrage (8) présente un alésage central et une couronne d'alésages (10) périphériques.

6. Buse à injection selon la revendication 1, caractérisée en ce que la douille de centrage (8, 8a) est en deux parties.
